# EUROPÄISCHE PATENTSCHRIFT

(11) **EP 1 847 732 B1**
(45) Veröffentlichungstag und Bekanntmachung des Hinweises auf die Patenterteilung: **27.06.2012**
(21) Anmeldenummer: 07006467.0
(22) Anmeldetag: 29.03.2007
(51) Int. Cl.: F16H 61/12

(54) **Verfahren und Vorrichtung zum Steuern eines Notlaufbetriebs eines Parallelschaltgetriebes**
Method and device for operating the emergency operating mode of a parallel standard transmission
Procédé et dispositif de commande d'un fonctionnement d'urgence d'un engrenage parallèle

(30) Priorität: 21.04.2006 DE 102006018699
(43) Veröffentlichungstag der Anmeldung: 24.10.2007
(73) Patentinhaber: Schaeffler Technologies AG & Co. KG, 91074 Herzogenaurach (DE)
(72) Erfinder: Küpper, Klaus, Dr., 77815 Bühl (DE); Berger, Reinhard, Dr., 77815 Bühl (DE); Jäggle, Gerd, 77839 Lichtenau (DE); Schweizer, Alexander, 77815 Bühl (DE)

(56) Entgegenhaltungen:
- EP-A1- 0 573 901
- EP-A2- 1 531 292
- EP-A2- 1 551 662
- WO-A1-2004/097266
- WO-A1-2007/101418

## Beschreibung

Die Erfindung betrifft ein Verfahren mit den Merkmalen gemäß dem Oberbegriff von Anspruch 1 und eine Vorrichtung mit den Merkmalen gemäß dem Oberbegriff von Anspruch 3.

Parallelschaltgetriebe bzw. Doppelkupplungsgetriebe enthalten zwei Teilgetriebe, mit denen unterschiedliche Gänge geschaltet werden. Wenn beispielsweise mit einem Teilgetriebe die geraden Gänge und mit dem anderen Teilgetriebe die ungeraden Gänge geschaltet werden, muss die dem Teilgetriebe mit dem ungeraden Gängen zugeordnete Kupplung bei einem eingelegten Gang offen sein, wenn die zu dem Teilgetriebe mit den geraden Gängen gehörende Kupplung geschlossen ist. In dem Teilgetriebe mit den ungeraden Gängen kann dann bei offener Kupplung ein ungerader Gang eingelegt werden, auf den dann lediglich durch Schließen der Kupplung des Teilgetriebes mit den ungeraden Gängen und öffnen der Kupplung des Teilgetriebes mit den geraden Gängen umgeschaltet wird. Wenn in beiden Teilgetrieben ein Gang eingelegt ist und beide Kupplungen geschlossen werden, könnte dies zu einer Zerstörung des Getriebes und/oder gefährlichen Betriebszuständen eines Fahrzeugs führen. Es ist daher zwingend erforderlich, dass die beiden Kupplungen ihre jeweilige Offenstellung sicher einnehmen. Entsprechend werden Kupplungen von Parallelschaltgetrieben bevorzugt derart gebaut, dass sie von ihrem Aktor gegen die Kraft einer Öffnungsfeder in Schließstellung gedrückt werden und von der Schließfeder in Offenstellung bewegt werden, sobald der Aktor nicht mehr mit Energie zum Schließen der Kupplung beaufschlagt ist.

Wenn bei solchen in Schließstellung gedrängten Kupplungen die Rückstellkraft der Öffnungsfeder nicht mehr ausreicht, um ein Betätigungsglied in seine Ausgangsstellung zurückzubewegen, würde die Kupplung bei deaktiviertem zugehörigen Aktor nicht vollständig öffnen. Ursachen dafür können beispielsweise Verschleiß im Betätigungsmechanismus, Korrosion oder sonstige Einflüsse sein. Die Öffnung muss dann zusätzlich durch den zugehörigen Kupplungsaktor unterstützt werden. Besonders gravierend ist ein Kupplungsfehler, bei dem auch eine Energiebeaufschlagung des Aktors für eine Öffnung der Kupplung nicht zuverlässig zu einem Öffnen der Kupplung führt.

Derartige Doppelkupplungsgetriebe sind auch beispielsweise aus der WO 2007/097266 A1 sowie der EP 1 531 292 A2 bekannt.

Aus der US 6,953,417 B2 ist ein Verfahren zum Steuern eines Doppelkupplungsgetriebes bekannt, bei dem bei Feststellen einer Nichtbetätigbarkeit einer Kupplung ein Antriebsmotor, der über das Doppelkupplungsgetriebe mit angetriebenen Rädern eines Fahrzeugs verbunden ist, derart gesteuert wird, dass auf die ausgefallene Kupplung kein Moment von der Antriebsmaschine her wirkt. Das zugehörige Teilgetriebe wird in Neutralstellung gebracht, d.h. in dem zugehörigen Teilgetriebe ist kein Gang mehr eingelegt. Das Fahrzeug kann dann mit Hilfe des anderen Teilgetriebes, dessen Kupplung intakt ist, bewegt werden.

Der Erfindung liegt die Aufgabe zugrunde, weitere Möglichkeiten zu schaffen, wie bei einem Fehler in einer Kupplung eines Parallelschalt- bzw. Doppelkupplungsgetriebes eine Beschädigung des Getriebes und gefährliche Betriebszustände des Fahrzeugs vermieden werden können und das Fahrzeug nach Möglichkeit weiter bewegt werden kann.

Diese Aufgabe wird durch ein Verfahren mit den Merkmalen gemäß Anspruch 1, sowie einer Vorrichtung gemäß Anspruch 3 gelöst.

Die vorgenannten Notlaufverfahren werden aktiviert, wenn die Selbstöffnungsfunktion einer der Kupplungen beeinträchtigt ist. Sie werden bei Parallelschaltgetrieben eingesetzt werden, deren Kupplungsaktoren grundsätzlich geeignet sind, die Kupplung sowohl in Offenstellung als auch in Schließstellung zu bewegen und dienen dann der Erhöhung der Betriebssicherheit, da das Fahrzeug an sich durch Aktivierung des jeweiligen Kupplungsaktor auch zum Bewegen der Kupplung in Offenstellung voll funktionsfähig ist.

Die vorgenannten Notlaufverfahren werden aktiviert, sobald festgestellt wird, dass eine jeweilige Kupplung mittels ihres Aktors nicht mehr sicher in Offenstellung bewegt werden kann.

Vorteilhaft ist, wenn ein Notlaufverfahren bereits dann aktiviert wird, wenn eine Fehlfunktion in der Betätigung einer der Kupplungen festgestellt wird, die auf einen Fehler in der Selbstöffnungsfunktion der Kupplung oder der Betätigbarkeit der Kupplung in deren Offenstellung hindeutet.

Eine erfindungsgemäße Vorrichtung zum Steuern eines Notlaufbetriebes eines Parallelschaltgetriebes mit zwei auf eine gemeinsame Abtriebswelle wirkenden Teilgetrieben, die über je eine Kupplung mit einer Antriebswelle kuppelbar sind, wobei jedem Teilgetriebe ein Getriebeaktor zum Ein- und Auslegen von Gängen des jeweiligen Teilgetriebes zugeordnet ist und jeder der Kupplungen ein Kupplungsaktor zugeordnet ist, mit dem bei einwandfreier Funktion die jeweilige Kupplung zwischen einer Schließ- und einer Offenstellung hin und her bewegbar ist, wobei durch Öffnen der Kupplung des einen Teilgetriebes und gleichzeitiges Schließen der Kupplung des anderen Teilgetriebes die Übersetzung des Parallelschaltgetriebes zugkraftunterbrechungsfrei von dem im einen Teilgetriebe eingelegten Gang auf den im anderen Teilgetriebe eingelegten Gang veränderbar ist, welche Vorrichtung eine elektronische Steuereinrichtung auf, deren Eingänge mit Sensoren zum Erfassen von die Steuerung der Aktoren bestimmenden Betriebsparametern verbunden sind und deren Ausgänge mit den Kupplungs- und Getriebeaktoren sowie einem Lastaktor zum Steuern der Last der Antriebsmaschine verbunden sind, ist derart ausgebildet, dass die elektronische Steuereinrichtung die mit ihr verbundenen Aktoren nach einem Verfahren gemäß einem der Ansprüche vorgenannten Ansprüche steuert.

Die Erfindung wird im Folgenden anhand schematischer Zeichnungen beispielsweise und mit weiteren Einzelheiten erläutert.

In den Figuren stellen dar:
- Figur 1: ein Blockschaltbild eines Parallelschaltgetriebes mit Komponenten einer Steuereinrichtung und
- Figur 2: Verfahrenschritte zum Aktivieren eines Notlaufbetriebs.

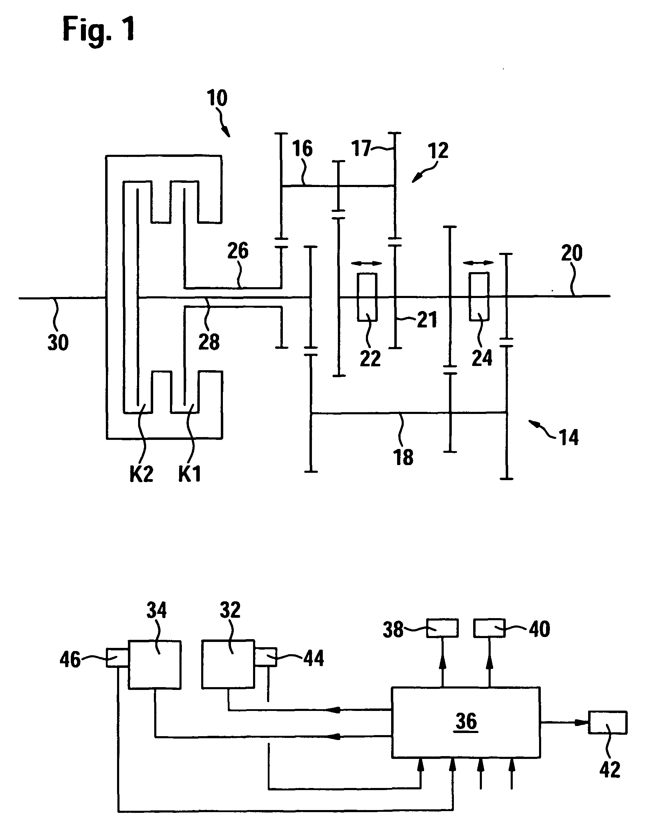

Gemäß Figur 1 weist ein insgesamt mit 10 bezeichnetes Parallelschaltgetriebe zwei Teilgetriebe 12 und 14 auf. Jedes Teilgetriebe hat eine Eingangswelle 16 bzw. 18, auf der Festräder 17 befestigt sind, die mit auf einer für bei Teilgetriebe 12 und 14 gemeinsamen Abtriebswelle 20 gelagerten Losrädern 21 kämmen. Die Losräder sind über Schalteinrichtungen 22 und 24 drehfest mit der Abtriebswelle 20 kuppelbar.

Die Eingangswelle 16 ist über ein Zahnradpaar drehfest mit einer Hohlwelle 26 verbunden, durch die hindurch eine weitere Welle 28 führt, die über ein Zahnradpaar drehfest mit der Eingangswelle 18 verbunden ist. Die Hohlwelle 26 ist über eine Kupplung K1 mit einer Antriebswelle 30, beispielsweise der Kurbelwelle einer Brennkraftmaschine, kuppelbar. Die Welle 28 ist über eine Kupplung K2 mit der Antriebswelle 30 kuppelbar. Die koaxial zueinander angeordneten Kupplungen, die zusammen eine Doppelkupplung bilden, sind nur schematisch und ohne ihre Betätigungsglieder dargestellt.

Die Funktion eines solchen Parallelschalt- bzw. Doppelkupplungsgetriebe ist an sich bekannt und wird daher nicht erläutert. Für die nachfolgende Erläuterung der Erfindung können auch Parallelschaltgetriebe mit anderem Aufbau als dem in Figur 1 dargestellten eingesetzt werden.

Zur Betätigung der Kupplungen K1 und K2 sind Kupplungsaktoren 32 und 34 vorgesehen, die von einer elektronischen Steuereinrichtung 36 angesteuert werden. Die Steuereinrichtung steuert über weitere Ausgänge Getriebeaktoren 38 und 40, die die Schalteinrichtungen 22 und 24 betätigen. Jeder der Getriebeaktoren enthält einen Schaltaktor und einen Wählaktor, die entsprechende Bewegungen der Schalteinrichtungen herbeiführen.

Ein weiterer Ausgang der elektronischen Steuereinrichtung 36 ist mit einem Lastaktor 42 zum Betätigen eines Laststellgliedes einer nicht dargestellten Brennkraftmaschine verbunden.

Die Kupplungsaktoren 32 und 34 können mit Betätigungsgliedern der Kupplungen K1 und K2, beispielsweise deren Kupplungshebel unmittelbar über Verbindungsglieder oder unter Zwischenschaltung einer hydraulischen Strecke verbunden sein. Die Aktoren können Elektromotoren, Hydraulikzylinder usw. sein. Zur Erfassung der Stellung der Autoren bzw. der Betätigungsglieder der Kupplungen sind Sensoren 44 und 46 vorgesehen, deren Ausgangssignale der elektronischen Steuereinrichtung 36 zugeführt werden. Stellungen von Elementen der Schalteinrichtung 22 bzw. 24 bzw. der Schaltaktoren 38 und 40 können der Steuereinrichtung ebenfalls zugeführt werden. Über weitere Eingänge werden der Steuereinrichtung 36 Signale zugeführt, entsprechend denen der Betrieb der Aktoren und des Leistungsstellglied der Brennkraftkraftmaschine gesteuert werden. Mit solchen Sensoren kann beispielsweise die Drehzahl der Brennkraftmaschine, die Stellung eines Fahrpedals, die Drehzahl eines angetriebenen Fahrzeugrades, die Temperatur der Brennkraftmaschine, die Stellung eines Getriebewählhebels usw. erfasst werden.

In der elektronischen Steuereinrichtung 36 sind Programme abgelegt, die beispielsweise abhängig von der Stellung eines Getriebewählhebels und gegebenenfalls weiteren Parametern aktiviert werden und entsprechend denen die Aktoren sowie ein Leistungsstellglied der Brennkraftmaschine in Abhängigkeit von den Ausgangssignalen der Sensoren gesteuert werden.

Aufbau und Funktionsweise einer solchen Steuereinrichtung sind an sich bekannt und werden daher nicht erläutert. Der in Figur 1 schematisch dargestellte prinzipielle Aufbau der Steuereinrichtung kann in vielfältiger Weise abgeändert sein. Beispielsweise können Elemente der Steuereinrichtung in anderen Steuergeräten, beispielsweise ein Motorsteuergerät, enthalten sein, wobei die Steuergeräte über Busleitungen zum Informationsaustausch verbunden sind.

Wie eingangs beschrieben, ist eine Vorraussetzung für den sicheren Betrieb des Parallelschaltgetriebes 10 eine einwandfreie Funktion der Kupplungen K1 und K2. Im Folgenden werden Möglichkeiten erläutert, wie auf Fehlfunktionen der Kupplungen oder deren Betätigungen reagiert wird, um einen sicheren Betrieb des Fahrzeugs zu gewährleisten und das Getriebe nicht zu gefährden.

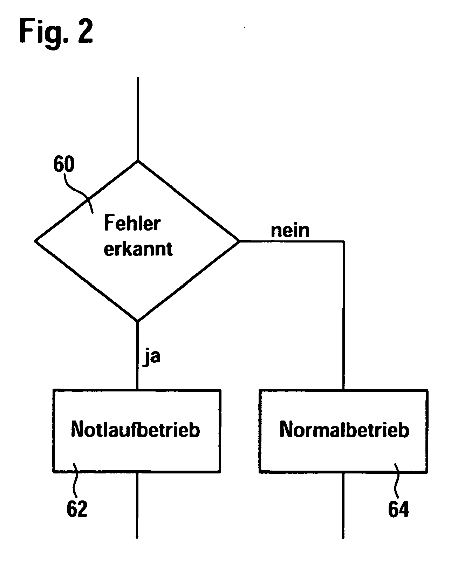

Zunächst wird davon ausgegangen, dass die Kupplungen K1 und K2 derart ausgebildet sind, dass sie bei fehlender Energiebeaufschlagung des jeweils zugehörigen Kupplungsaktors sich selbsttätig in ihre Offenstellung bewegen. Die Bewegung in die Offenstellung bzw. die Offenstellung selbst kann auf unterschiedliche Möglichkeiten sensiert werden; beispielsweise kann erfasst werden, ob sich ein Element in der Bewegungsübertragung zwischen dem jeweiligen Aktor und dem Betätigungsglied der Kupplung nach Deaktivieren des Kupplungsaktors bei in Schließstellung befindlicher Kupplung in vorbestimmter Weise bewegt und/oder einen Anschlag erreicht usw. Diese Selbstöffnungsfunktion der Kupplung wird von der Steuereinrichtung 36 überwacht. Sobald ein Fehler in der Selbstöffnungsfunktion erkannt wird (Schritt 60 in Figur 2), wird im Schritt 62 eines der nachfolgend erläuterten Notlaufverfahren bzw. Notlaufprogramme aktiviert wobei lediglich die Notlaufverfahren b), c) und e) zur Erfindung gehören. Wenn kein Fehler festgestellt wird, bleibt das Programm im Normalbetrieb (Schritt 64).
a) Im Schritt 62 kann beispielsweise ein Programm bzw. Verfahren aktiviert werden, bei dem in dem der nicht mehr selbstöffnenden Kupplung zugeordneten Teilgetriebe kein Gang mehr vorgewählt bzw. eingelegt wird, so dass ein Schließen der fehlerhaften Kupplung und damit eine Aktivierung des zugehörigen Teilgetriebes nicht mehr dadurch zu einer Gefährdung führen kann, dass die Kupplung anschließend nicht mehr geöffnet werden kann.
b) Eine Vorwahl, d.h. ein Einlegen, eines neuen Gangs in dem der fehlerhaften Kupplung zugeordneten Getriebe wird nur noch dann ausgeführt, wenn ein Gangwechsel bereits angefordert ist und ausgeführt werden soll. In diesem Fall wird noch eine Schaltung ausgeführt, obwohl die Gefahr besteht, dass der neue Gang, der im Parallelschaltgetriebe wirksam ist, nicht mehr problemlos ausgelegt werden kann. Ein Fall, in dem trotz Erkenntnis eines Fehlers noch geschaltet wird, ist beispielsweise der, dass beim Bergauffahren die Leistung des Motors für ein Fahren im zweiten Gang nicht mehr ausreicht und in den ersten Gang geschaltet werden muss, um die Bergauffahrt fortsetzen.
c) Da in hohen Gängen eine Verspannung des Parallelschaltgetriebes aufgrund der Übersetzungen weniger kritisch ist, kann in hohen Gängen notfalls trotz fehlerhafter Kupplung weiterhin im zugehörigen Teilgetriebe ein neuer Gang vorgewählt werden.
d) Eine weitere Möglichkeit, auf einen Fehler in der Selbstöffnungsfunktion einer Kupplung zu reagieren, besteht darin, das betroffene Teilgetriebe stillzulegen, d.h. in Neutral zu schalten (alle Gänge ausgelegt) und nur mit dem anderen Teilgetriebe, dessen zugeordnete Kupplung intakt ist, zu fahren.
e) Weiter kann eine Reaktion auf einen Fehler in der Selbstöffnungsfunktion einer Kupplung darin bestehen, dass ein Notlaufprogramm aktiviert wird, bei dem der Fahrer gewarnt wird. Beispielsweise kann ein Freilauf aktiviert werden, wenn sich der Antriebsstrang im Schubbetrieb befindet. Dabei können die Kupplungen dann durch die jeweiligen Aktoren in Offenstellung bewegt werden.
f) Schließlich kann das System auf einen Fehler in der Selbstöffnungsfunktion der Kupplung reagieren, in dem es den Fahrer durch Ausgabe einer Warnmeldung, beispielsweise einer optischen oder akustischen Anzeige, gegebenenfalls mit Sprachausgabe, auf den Fehler hinweist. Diese Warnung kann bei jedwelchem in der Kupplungsbetätigung oder der Getriebebetätigung festgestellten Fehler erfolgen.

Nachfolgend werden nicht zur Erfindung gehörende Möglichkeiten erläutert, wie elektronische Steuereinrichtungen auf einen im Schritt 60 erkannten Fehler reagieren kann, bei dem festgestellt wird, dass eine Kupplung durch ihren Aktor nicht mehr positiv in Offenstellung gelegt werden kann. Notlaufverfahren bzw. -programme, die daraufhin aktiviert werden, können beispielsweise in Folgendem bestehen:
g) Die Steuereinrichtung 36 steuert den Getriebeaktor des von einem Kupplungsfehler betroffenen Teilgetriebes so an, dass die jeweilige Schalteinrichtung in Richtung eines Auslegens des im betroffenen Teilgetriebe eingelegten Gangs möglichst maximal vorgespannt ist, um bei einer Abnahme des von der betroffenen Kupplung übertragenen Drehmoments beispielsweise bei einem natürlichen Lastwechsel (Fahrer geht vom Gas) den Gang auszulegen. Auf diese Weise ist das von der fehlerhaften Kupplung betroffene Getriebe auf Neutral geschaltet und das Fahrzeug kann mit dem anderen Teilgetriebe, dessen Kupplung in Ordnung ist, weiter bewegt werden.
h) Eine weitere Möglichkeit, auf einen Fehler zu reagieren, besteht darin, eine Zughochschaltung einzuleiten, bei der zu dem Zeitpunkt, zu dem das vom Motor her wirkende Moment durch die den neuen Gang zugeordnete Kupplung übernommen wird und die fehlerhafte Kupplung, die dem Teilgetriebe, in dem der alte Gang eingelegt ist, kein oder nur ein geringes Moment überträgt, der alte Gang ausgelegt wird. Die Abnahme des über die fehlerhafte Kupplung übertragenen Drehmoments kann durch Motoreingriff, beispielsweise Rücknahme der Stellung des Laststellgliedes, Zündverstellung usw., unterstützt werden. Auch durch eine gezielte Ansteuerung der neuen Kupplung im Sinne der Abschwächung des von der fehlerhaften Kupplung übertragenen Moments ist zweckmäßig. Wenn der Fahrer in dieser Situation die Stellung des Fahrpedals zurücknimmt, kann der alte Gang bereits früher ausgelegt werden, wobei die neue intakte Kupplung vorteilhafterweise etwas geöffnet wird.
i) Wenn sich das Fahrzeug im Schubbetrieb befindet, kann das von der Kupplung übertragene Moment durch einen positiven Motoreingriff entlastet werden, beispielsweise dadurch, dass das Laststellglied im Sinne einer Zunahme des Motormoments verstellt wird, so dass der aktuelle Gang bei im Wesentlichen momentenfreien Teilgetriebe ausgelegt werden kann.
j) Weiter ist es möglich, mit dem aktuell eingelegten Gang weiter zu fahren. Das andere Teilgetriebe, dessen Kupplung geöffnet ist, wird vorteilhafter Weise auf Neutral geschaltet. Wenn der Fahrer das Fahrzeug anhält, ohne dass der Gang vorher ausgelegt werden konnte, kann durch die unter g) beschriebene Vorspannung versucht werden, den Gang beim Anhalten auszulegen. Gelingt dies nicht, kann der Verbrennungsmotor abgewürgt oder vorteilhaft aktiv abgeschaltet werden, um ein Anhalten des Fahrzeugs zu ermöglichen. Während dieses Anhaltens ist der Triebstrangwechsel Belastungen ausgesetzt, während derer versucht werden kann, den Gang auszulegen. Bei stillstehendem Fahrzeug kann der Gang wegen des entlasteten Triebstrangs ausgelegt werden.

Die vorstehend geschilderten Notlaufverfahren können bereits aktiviert werden, wenn ein Kupplungsfehler noch nicht aktuell festgestellt ist, sondern nur vermutet wird. Dies kann beispielsweise der Fall sein, wenn die Stellung eines Kupplungshebels durch eine Inkrementalmessung erfolgt, bei der Unregelmäßigkeiten festgestellt werden, beispielsweise unerwartete Stillstände oder zu langsame Bewegungsabläufe, die auf Unregelmäßigkeiten hindeuten. Die geschilderten Notlaufstrategien werden dann rein vorsichtshalber aktiviert, so dass tatsächlich eintretende Schäden sicher vermieden werden können. Es versteht sich, dass solche Unregelmäßigkeiten zu Warnanzeigen führen, aufgrund derer das System überprüft werden kann.

### Bezugszeichenliste

- 10: Parallelschaltgetriebe
- 12: Teilgetriebe
- 14: Teilgetriebe
- 16: Eingangswelle
- 17: Festrad
- 18: Eingangswelle
- 20: Abtriebswelle
- 21: Losrad
- 22: Schalteinrichtung
- 24: Schalteinrichtung
- 26: Hohlwelle
- 28: Welle
- 30: Antriebswelle
- 32: Kupplungsaktor
- 34: Kupplungsaktor
- 36: elektronische Steuereinrichtung
- 38: Getriebeaktor
- 40: Getriebeaktor
- 42: Lastaktor
- 44: Sensor
- 46: Sensor

## Patentansprüche

1. Verfahren zum Steuern eines Notlaufbetriebs eines Parallelschaltgetriebes mit zwei auf eine gemeinsame Abtriebswelle wirkenden Teilgetrieben, die über je eine Kupplung mit einer Antriebswelle kuppelbar sind, wobei bei einwandfreiem Betriebszustand des Parallelschaltgetriebes jede der Kupplungen von einem zugehörigen Kupplungsaktor in Schließstellung bewegbar ist und bei nicht aktiviertem Kupplungsaktor selbsttätig öffnet und durch Öffnen der Kupplung des einen Teilgetriebes und gleichzeitiges Schließen der Kupplung des anderen Teilgetriebes die Übersetzung des Parallelschaltgetriebes zugkraftunterbrechungsfrei von einem in einem Teilgetriebe eingelegten Gang auf einen im anderen Teilgetriebe eingelegten Gang veränderbar ist,
**dadurch gekennzeichnet, dass** bei Feststellen eines Fehlers in einer Selbstöffnungsfunktion einer der Kupplungen wenigstens eines der folgenden Notlaufverfahren aktiviert wird, wobei die Kupplung noch aktiv in Offenstellung gebracht werden kann:
a) Einlegen eines Gangs in dem der nicht mehr selbstöffnenden Kupplung zugeordneten Teilgetriebe nur, wenn bereits ein Gangwechsel angefordert ist,
b) Vorwahl nur eines hohen Gangs in dem der nicht mehr selbstöffnenden Kupplung zugeordneten Teilgetriebe, wenn im anderen Teilgetriebe ein hoher Gang eingelegt ist,
c) Öffnen beider Kupplungen bei Motormoment Null.

2. Verfahren nach Anspruch 1, **dadurch gekennzeichnet, dass** ein Notlaufverfahren bereits aktiviert wird, wenn eine Fehlfunktion in der Betätigung einer der Kupplungen festgestellt wird, die auf einen Fehler in der Selbstöffnungsfunktion der Kupplung hindeutet.

3. Vorrichtung zum Steuern eines Notlaufbetriebs eines Parallelschaltgetriebes (10) mit zwei auf eine gemeinsame Abtriebswelle (20) wirkenden Teilgetrieben, die über je eine Kupplung (K1, K2) mit einer Antriebswelle (16, 18) kuppelbar sind, wobei jedem Teilgetriebe ein Getriebeaktor (38, 40) zum Ein- und Auslegen von Gängen des jeweiligen Teilgetriebes zugeordnet ist und jeder der Kupplungen ein Kupplungsaktor (32, 34) zugeordnet ist, mit dem die jeweilige Kupplung bei einwandfreier Funktion zwischen einer Schließ- und einer Offenstellung hin und her bewegbar ist, wobei durch Öffnen der Kupplung des einen Teilgetriebes und gleichzeitiges Schließen der Kupplung des anderen Teilgetriebes die Übersetzung des Parallelschaltgetriebes zugkraftunterbrechungsfrei von dem im einen Teilgetriebe eingelegten Gang auf den im anderen Teilgetriebe eingelegten Gang veränderbar ist, welche Vorrichtung eine elektronische Steuereinrichtung (36) aufweist, deren Eingänge mit Sensoren zum Erfassen von die Steuerung der Aktoren bestimmenden Betriebsparametern verbunden sind und deren Ausgänge mit den Kupplungs- und Getriebeaktoren sowie einem Lastaktor (42) zum Steuern der Last der Antriebsmaschine verbunden sind, **dadurch gekennzeichnet, dass** die elektronische Steuereinrichtung (36) die mit ihr verbundenen Aktoren nach einem Verfahren gemäß einem der Ansprüche 1 oder 2 steuert.

## Claims

1. Method for controlling an emergency running mode of a parallel-shift gearbox having two component gearboxes which act on a common drive output shaft and which can be coupled via in each case one clutch to a drive input shaft, wherein in a fault-free operating state of the parallel-shift gearbox, each of the clutches can be moved into a closed position by an associated clutch actuator and automatically opens when the clutch actuator is not activated, and the transmission ratio of the parallel-shift gearbox can be changed, without an interruption in tractive force, from a gear engaged in one component gearbox to a gear engaged in the other component gearbox by virtue of the clutch of one component gearbox being opened and the clutch of the other component gearbox simultaneously being closed,
**characterized in that**, if a fault in a self-opening function of one of the clutches is detected, at least one of the following emergency running processes is activated, wherein the clutch can still be moved actively into the open position:
a) engaging a gear in the component gearbox assigned to the no longer self-opening clutch only if a gearshift has already been demanded,
b) preselecting only a high gear in the component gearbox assigned to the no longer self-opening clutch if a high gear is engaged in the other component gearbox,
c) opening both clutches when the engine torque is zero.

2. Method according to Claim 1, **characterized in that** an emergency running process is activated already if a malfunction in the actuation of one of the clutches is detected which indicates a fault in the self-opening function of the clutch.

3. Device for controlling an emergency running mode of a parallel-shift gearbox (10) having two component gearboxes which act on a common drive output shaft (20) and which can be coupled via in each case one clutch (K1, K2) to a drive input shaft (16, 18), wherein each component gearbox is assigned a gearbox actuator (38, 40) for engaging and disengaging gears of the respective component gearbox, and each of the clutches is assigned a clutch actuator (32, 34) by means of the respective clutch can, in the case of fault-free functioning, be moved back and forth between a closed position and an open position, wherein the transmission ratio of the parallel-shift gearbox can be changed, without an interruption in tractive force, from the gear engaged in one component gearbox to the gear engaged in the other component gearbox by virtue of the clutch of one component gearbox being opened and the clutch of the other component gearbox simultaneously being closed, which device has an electronic control unit (36) whose inputs are connected to sensors for measuring operating parameters which determine the control of the actuators, and whose outputs are connected to the clutch and gearbox actuators and to a load actuator (42) for controlling the load of the drive engine, **characterized in that** the electronic control unit (36) controls the actuators connected thereto in accordance with a method as per either of Claims 1 and 2.

## Revendications

1. Procédé de commande d'un fonctionnement d'urgence d'une boîte de vitesses à engrenages parallèles dotée de deux parties d'engrenage agissant sur un arbre d'entraînement en sortie commun, lesdits engrenages pouvant être couplés à un arbre d'entraînement en entrée par le biais respectivement d'un embrayage, chacun des embrayages pouvant être déplacé dans la position de fermeture par un actionneur d'embrayage associé dans l'état de fonctionnement sans entrave de la boîte de vitesses à engrenages parallèles et s'ouvrant automatiquement lorsque l'actionneur d'embrayage n'est pas activé et le facteur de multiplication de la boîte de vitesses à engrenages parallèles pouvant être changé, sans interrompre la force de traction, en passant d'une vitesse passée dans une partie d'engrenage à une vitesse passée dans l'autre partie d'engrenage, du fait de l'ouverture de l'embrayage de la première partie d'engrenage et de la fermeture simultanée de l'embrayage de l'autre partie d'engrenage ;
**caractérisé en ce qu'**en cas de détection d'une anomalie dans une fonction d'ouverture automatique d'un des embrayages, au moins un des procédés d'urgence suivants est activé, l'embrayage pouvant encore être amené activement en position ouverte :
a) passage d'une vitesse dans la partie d'engrenage associée à l'embrayage ne s'ouvrant plus automatiquement seulement lorsqu'un changement de vitesse a déjà été demandé ;
b) présélection d'une vitesse supérieure uniquement dans la partie d'engrenage associée à l'embrayage ne s'ouvrant plus automatiquement lorsqu'une vitesse plus élevée est passée dans l'autre partie d'engrenage ;
c) ouverture des deux embrayages lorsque le couple du moteur est nul.

2. Procédé selon la revendication 1, **caractérisé en ce qu'**un procédé d'urgence est déjà activé lorsqu'un dysfonctionnement est détecté dans l'actionnement d'un des embrayages et que ledit dysfonctionnement indique une anomalie dans la fonction d'ouverture automatique de l'embrayage.

3. Dispositif de commande d'un fonctionnement d'urgence d'une boîte de vitesses à engrenages parallèles (10) dotée de deux parties d'engrenage agissant sur un arbre d'entraînement en sortie (20) commun, lesdits engrenages pouvant être couplés à un arbre d'entraînement en entrée (16, 18) par le biais respectivement d'un embrayage (K1, K2), un actionneur d'engrenage (38, 40) étant associé à chaque partie d'engrenage pour passer et retirer les vitesses de la partie d'engrenage respective et un actionneur d'embrayage (32, 34) étant associé à chacun des embrayages, ledit actionneur d'embrayage permettant de déplacer selon un mouvement de va-et-vient l'embrayage respectif entre une position fermée et une position ouverte dans la fonction sans entrave, le facteur de multiplication de la boîte de vitesses à engrenages parallèles pouvant être changé, sans interrompre la force de traction, en passant d'une vitesse passée dans une partie d'engrenage à une vitesse passée dans l'autre partie d'engrenage, du fait de l'ouverture de l'embrayage de la première partie d'engrenage et de la fermeture simultanée de l'embrayage de l'autre partie d'engrenage, ledit dispositif comprenant un dispositif de commande électronique (36) dont les entrées sont reliées à des capteurs servant à détecter les paramètres de fonctionnement déterminant la commande des actionneurs et dont les sorties sont reliées aux actionneurs d'embrayage et d'engrenage ainsi qu'à un actionneur de charge (42) servant à commander la charge du moteur d'entraînement en entrée, **caractérisé en ce que** le dispositif de commande électronique (36) commande les actionneurs reliés à lui selon un procédé selon l'une quelconque des revendications 1 ou 2.
